# NEW EUROPEAN PATENT SPECIFICATION

(11) **EP 0 169 611 B2**
(45) Date of publication and mention of the opposition decision: **27.01.1993**
(45) Mention of the grant of the patent: 08.08.1990
(21) Application number: 85201152.7
(22) Date of filing: 09.07.1985
(51) Int. Cl.: B01D 3/28

(54) **Column and process for gas/liquid contact**
Kolonne und Verfahren zum Gas-Flüssigkeits-Kontakt
Colonne et procédé de contact gaz/liquide

(30) Priority: 25.07.1984 GB 8418918
(43) Date of publication of application: 29.01.1986
(73) Proprietor: SHELL INTERNATIONALE RESEARCH MAATSCHAPPIJ B.V., 2596 HR Den Haag (NL)
(72) Inventor: Pek, Johan Jan Barend, NL-2596 HR The Hague (NL)

(56) References cited:
- DE-C- 311 863
- DE-C- 954 689
- DE-C- 1 082 236
- US-A- 3 259 380
- Sulzer-Kolonnen für Absorptions- und Desorptionsprozesse, Technische Rundschau Sulzer 2/1979, P. Bomio, p. 67
- Industrielle Destillation, R. Billet, Verlag Chemie, 1973, p. 117

## Description

The present invention relates to a column for contacting a gas stream countercurrently with a liquid stream. The invention further relates to a process in which such a column is used and more in particular to such a process for dehydrating a wet gas stream.

The term gas as used in the specification and the claims is to be understood also to include vapour.

Streams of wet gas such as raw material gas are conventionally dried by contacting such gas streams with a liquid absorbent, such as diethylene or triethylene glycol. The water present in the gas stream is absorbed by the glycol absorbent stream to an extent depending on the purity of the absorbent and the degree of contact between the gas stream and the absorbent. Gas dehydrating processes are normally carried out in columns provided with internals promoting contact between a gas stream and a countercurrently flowing liquid absorbent. The internals may be formed by contacting trays, provided with apertures for upwardly flowing gas and downcomers for transfer of liquid to a next lower stage. More preferably, the internals are formed by one or more layers of packing material.

Packing material is commercially available in a large variety of different configurations, such as Ra- schig rings or Pall rings which are randomly distributed in a contact column or as structured packing material for example formed by a plurality of closely packed vertically extending corrugated sheets. Upon operation of a column of the afore-mentioned type provided with one or more layers of packing material, a gas stream is caused to flow in upward direction through the packing material, while liquid is caused to flow in downward direction along the surfaces of the packing material. In this type of gas/liquid contact processing care should be taken that the liquid is distributed as evenly as possible over the packing material in order to achieve an optimal contact of gas and liquid during operation. The liquid is therefore normally supplied onto the surface of the packing material via a plurality of drip points, which are substantially evenly distributed over a cross sectional area of the column above the packing material.

Even with the above-described provisions known columns for gas/liquid contact often suffer from inefficient operation due to liquid entrainment by the upward flowing gas stream in particular occurring at higher gas loads.

Afurther problem adhered with processes carried out in known columns is formed by plugging of the passages in a liquid distributor, which plugging problem is especially of concern if the liquid contains solid contaminations and/or if the column is operated at a low liquid load necessitating the use of narrow liquid passages in the liquid distributor.

Apart from the hereinbefore mentioned risks of liquid entrainment and of plugging of the liquid passages in the liquid distributor, there is the risk of insufficient and inefficient contact between downflowing liquid and upflowing gas due to liquid maldistribution in the column. Such liquid maldistribution may be caused by the fact that columns, especially tall columns, are normally slightly inclined and/or by the occurrence of gradients in the liquid flowing along the liquid distributors.

The usual types of liquid distributors comprise normally flat pans or troughs, provided with apertures for upwardly flowing gas and relatively small pipes or holes for downwardly flowing liquid. Furthermore, liquid distributors are known which are formed by a plurality of parallel slotted troughs provided with a central feed system. Whereas these distributors will normally function satisfactorily when installed strictly in a horizontal position and when they are intended for handling relatively large liquid loads, they will cease to function properly when they are not completely horizontally mounted or when the column in which they are installed is substantially tilted, when they are to be used in gas treating processes normally operated at only low liquid loads, or when the openings for liquid passage in the liquid distributor are becoming plugged.

USApatentspecification No. 3,259,380 discloses a column for contacting a gas stream counter-currently with a liquid stream which column comprises a substantially horizontal layer of packing material, a gas inlet and a liquid outlet below said layer and a gas outlet and a liquid inlet above said layer, substantially horizontal liquid distribution means which comprises a plurality of gas passages and openings through which substantially vertical liquid drain pipes having walls provided with liquid passages are mounted.

An object of the present invention is to provide an improved column for contacting a gas stream counter- currently with a liquid stream, which column enables gas/liquid contact at a better level of performance at higher gas loads than attainable with the known gas/liquid contact devices.

To this end the column according to the invention for contacting a gas stream counter-currently with a liquid stream is characterized in that the lower ends of the drain pipes extend below the liquid distribution means and adjacent to the upper surface of the layer of packing material, and wherein the drain pipes are vertically adjustably mounted in openings of the liquid distribution means

The arrangement of the drain pipes with their lower ends positioned below the lower surface of the liquid distribution means prevents creeping of liquid along said lower surface during operation of the column.

Such a creeping of liquid might cause uneven distribution of liquid and especially at high gas loads might easily give rise to liquid entrainment. Because in the column according to the present invention the lower ends of the drain pipes are arranged adjacent to the upper surface of the layer of packing material, liquid entrainment is minimized or even completely prevented.

To minimize the risk of plugging of the liquid passages, these passages preferably have the shape of slits. The width of such slits should be so chosen that for a given liquid flow and given liquid and gas densities the weir crest is sufficiently large to assure a substantially uniform distribution of liquid over the total number of drain pipes. The slits are preferably of a rectangular shape to further minimize the risk of plugging by settlement of solid contaminations in the liquid flow.

The drain pipes are vertically adjustable mounted in openings of the liquid distribution means, so that the height of the lower ends of the openings in the drain pipe walls is adjustable for each drain pipe separately to allow adjustment of the liquid distribution over the drain pipes. In particular if the column is intended for use at low liquid loads, the adjustment of the individual drain pipes is an important aspect for preventing liquid maldistribution.

The liquid distribution means suitably comprise a box-like structure such as a tray extending over substantially the entire cross-section of the column, wherein said tray is provided with an upright peripheral wall to form a liquid sump and with riser pipes allowing the passage of upward flowing gas. Alternatively, the liquid distribution means may be formed by a plurality of substantially parallel gutters spaced apart from one another to allow gas to pass between said gutters.

The invention further relates to a process for contacting a gas stream with a counter-currently flowing liquid stream in which process use is made of a column according to the invention. The proposed process is in particular suitable for dehydrating a wet gas stream by contacting the gas stream with a counter- currently flowing stream of liquid absorbent, such as a glycol, for example diethylene or triethylene glycol.

The invention will now be further elucidated by way of example only with reference to the accompanying drawings, wherein
Figure 1 shows an intermediate part of a column according to the invention in cross-section,
Figure 2 shows cross-section II-II of Figure 1,
Figure 3 shows an alternative of the liquid distributing means shown in Figure 1,
Figure 4 shows cross-section IV-IV of Figure 3, and
Figure 5 shows an adjustable drain pipe in detail.

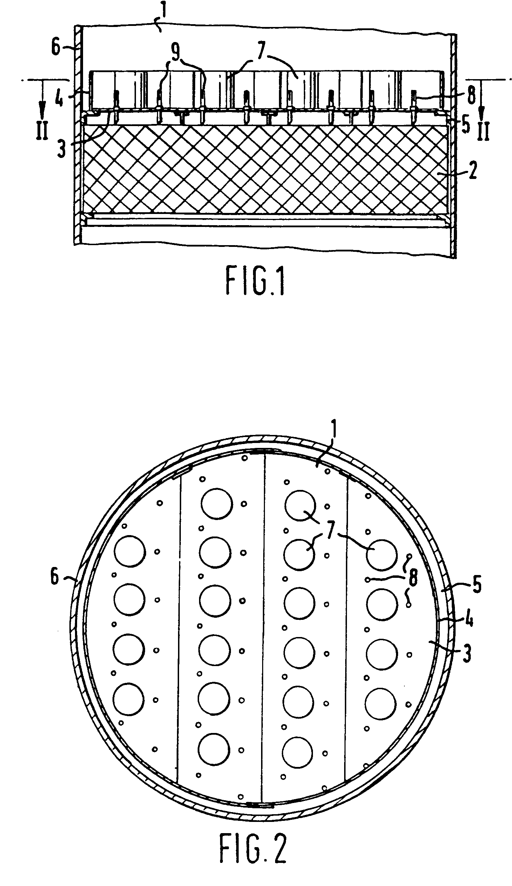

Referring to Figures 1 and 2, an intermediate part of a column for contacting a gas stream with a countercurrently flowing liquid stream is shown. The column, generally indicated with reference numeral 1, is provided with inlet means (not shown) for liquid in the upper part of the column and with inlet means (not shown) for gas in the lower part of the column. Liquid and gas can be discharged from the column via a liquid outlet and a gas outlet (both not shown) in the lower part of the column and in the upper part of the column, respectively. For promoting gas/ liquid contact, the column is provided with a layer 2 of packing material, said layer being for example formed by a plurality of vertically extending corrugated sheets closely packed in such a manner that the corrugations of adjacent sheets are arranged at an angle with respect to one another to form a labyrinth of passages for upwardly flowing gas and descending liquid. The distribution of liquid over the packing material is accomplished via a box-like structure consisting substantially of a horizontal tray 3 with an upright peripheral wall 4. The tray 3 is supported by a support ring 5, attached, for example, by welding to the inner surface of the wall of the column, said wall being indicated with reference numeral 6. The tray 3 is provided with a plurality of equally distributed gas passages (risers 7 having upper ends arranged at a distance above the tray). For the distribution of liquid, tray 3 is further provided with a plurality of drain pipes 8 mounted in a further set of openings in the tray and extending above and below the tray. The lower ends of said drain pipes 8 are arranged adjacent to the upper surface of the layer 2 of packing material. The upper ends of the drain pipes 8 extend above tray 3 to form an accumulation zone for settlement of solid contaminations in the liquid stream introduced onto tray 3. The drain pipes 8 are each provided with one or more rectangular slits 9 to assure sufficient weir crest. It will be understood that the upper ends of the gas risers 7 should be positioned above the drain pipes to prevent overflow of liquid. The inner diameters of the drain pipes 8 should be sufficiently large to prevent plugging during operation of the column. The required number of drain pipes 8, which should in any way be substantially uniformly distributed over tray 3, depends on the required degree of distribution which is in its turn dependent on the applied type of packing material.

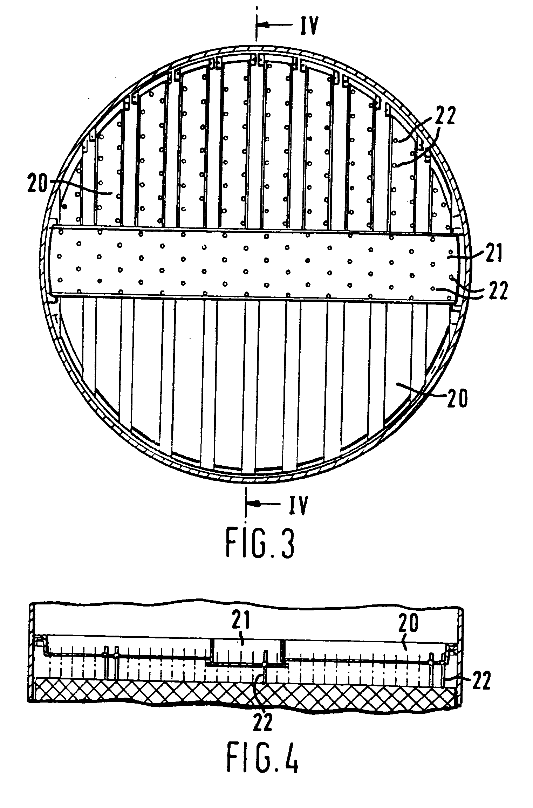

Reference is now made to Figures 3 and 4 showing an alternative of the liquid distributing means shown in Figures 1 and 2. In this further embodiment of the invention, the tray 3 has been replaced by a plurality of spaced apart substantially horizontal gutters 20 arranged in parallel order. Each of the gutters 20 is joined to a supply gutter 21 extending substantially perpendicular to the gutters 20. The liquid inlet (not shown) of the column should be so directed that introduced liquid flows directly into the supply gutter and from there into the gutters 20. Each of the gutters 20 is provided with one or more rows of substantially equally spaced drain pipes 22 provided with slit-like openings (not shown) for the entry of liquid. During operation gas passes the gutters 20 via the spaces left between said gutters.

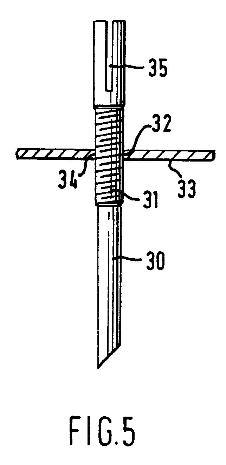

Figure 5 shows an adjustable drain pipe for liquid in detail.

Adjustable drain pipes are especially preferred if the out of levelness of the tray or gutters in which the pipes are mounted is substantial and cannot be compensated by the weir crest.

The adjustable drain pipe, indicated with reference numeral 30, is provided with external screw thread 31, arranged in an opening 32 of a liquid distribution tray 33 provided with internal screw thread 34 cooperable with the screw thread of drain pipe 30. The adjustable drain pipe is further provided with a slit 35 for the entry of liquid into said pipe. The lower end of the drain pipe 30 is bevelled to enable accurate supply of liquid onto the packing material. It will be understood that instead of the shown screw thread arrangement, any other suitable locking means, which may be known per se, can be applied.

The process for dehydrating a wet gas stream with a counter-currently flowing liquid absorbent in which a column having internals as shown in Figure 1 is used, can be carried out as follows. Wet gas introduced into a lower part of column 1 flows upwardly through a layer 2 of packing material and is in said layer intensely contacted with liquid absorbent flowing in downward direction through the layer of packing material. Entrainment of liquid introduced onto the layer of packing material via the drain pipes 8, by the gas flow leaving the packing material, is absent or only minimal on account of the position of the lower ends of the drain pipes below the tray 3 close to the packing material. In particular in dehydrating processes it is important that loss of liquid absorbent should be minimized to eliminate the risk of corrosion in the gas transport system downstream of the dehydrating apparatus.

Dehydrated gas passes through the gas risers 7 and can be further treated in an upper part of the column or can directly be withdrawn from the column. Spent liquid absorbent is discharged from the lower part of the column and can be reintroduced onto tray 3 after regeneration outside the column.

Dehydrated gas passes through the gas risers 7 and can be further treated in an upper part of the column or can directly be withdrawn from the column. Spent liquid absorbent is discharged from the lower part of the column and can be reintroduced onto tray 3 after regeneration outside the column.

It should be noted that the liquid distribution means shown in the Figures may be suitably combined with liquid collecting means for collecting the liquid and (partial) withdrawal of the liquid from the column interior and distributing the remainder of said liquid over a further part of the column interior. A combined liquid distributor and liquid collector may for example be used with advantage in fractionation columns, suitably provided with side withdrawal lines and packing material for fractionation purposes.

## Claims

1. A column for contacting a gas stream countercurrently with a liquid stream which column comprises a substantially horizontal layer of packing material, a gas inlet and a liquid outlet below said layer and a gas outlet and a liquid inlet above said layer, substantially horizontal liquid distribution means which comprise a plurality of gas passages and openings through which substantially vertical liquid drain pipes having walls provided with liquid passages are mounted, characterized in that the lower ends of the drain pipes extend below the liquid distribution means and adjacent to the upper surface of the layer of packing material, and wherein the drain pipes are vertically adjustably mounted in openings of the liquid distribution means.

2. The column as claimed in claim 1, characterized in that the liquid passages in the drain pipes are slit-like openings.

3. The column as claimed in claim 2, characterized in that the slit-like openings have a rectangular shape.

4. The column as claimed in any one of the claims 1-3, characterized in that the drain pipes have bevelled lower ends.

5. The column as claimed in any one of the claims 1-4, characterized in that the liquid distribution means is formed by a tray over the substantially entire internal cross-section of the column, said tray being provided with an upright peripheral wall to form a liquid sump and with riser pipes as gas passages.

6. The column as claimed in any one of the claims 1-4, characterized in that the liquid distribution means is formed by a plurality of substantially parallel spaced gutters with gas passages between said gutters.

7. The column as claimed in any one of the claims 1-6, characterized in that the liquid distribution means is further provided with liquid collecting means cooperating with a liquid outlet of the column.

8. A process for contacting a gas stream with a countercurrently flowing liquid stream in which process a column is used as claimed in any one of the preceding claims.

9. The process as claimed in claim 8 characterized in that the gas stream is a wet gas stream and the liquid stream is a liquid absorbent suitable for dehydrating the wet gas stream.

## Patentansprüche

1. Säule zum Kontaktieren eines Gasstromes im Gegenstrom mit einem Flüssigkeitsstrom, wobei die Säule eine im wesentlichen horizontale Schicht aus Packungsmaterial, einen Gaseinlaß und einen Flüssigkeitsauslaß unter der Schicht und einen Gasauslaß und einen Flüssigkeitseinlaß über der Schicht und eine im wesentlichen horizontale Flüssigkeitsverteilungseinrichtung umfaßt, welche eine Mehrzahl von Gasdurchgängen und Öffnungen umfaßt, durch welche im wesentlichen vertikale Flüssigkeitsabzugsrohre angebracht sind, die mit Flüssigkeitsdurchgängen versehene Wände haben,
dadurch gekennzeichnet, daß die unteren Enden der Abzugsrohre sich unter die Flüssigkeitsverteilungseinrichtung und nahe zu der oberen fläche der Schicht aus Packungsmaterial erstrecken, und wobei die Abzugsrohre in Öffnungen der Flüssigkeitsverteilungseinrichtung vertikal einstellbar angebracht sind.

2. Die Säule nach Anspruch 1, dadurch gekennzeichnet, daß die Flüssigkeitsdurchgänge in den Abzugsrohren schlitzartige Öffnungen sind.

3. Die Säule nach Anspruch 2, dadurch gekennzeichnet, daß die schlitzartigen Öffnungen rechtwinkelige Gestalt haben.

4. Die Säule nach irgendeinem der Ansprüche 1 bis 3, dadurch gekennzeichnet, daß die Abzugsrohre abgeschrägte Enden haben.

5. Die Säule nach irgendeinem der Ansprüche 1 bis 4, dadurch gekennzeichnet, daß die Flüssigkeitsverteilungseinrichtung durch einen Trog über im wesentlichen die gesamte innere Querschnittsfläche der Säule gebildet ist, wobei der Trog mit einer aufrechten Umfangswand zum Bilden eines Flüssigkeitssumpfes und mit Steigerrohren als Gasdurchgänge versehen ist.

6. Die Säule nach irgendeinem der Ansprüche 1 bis 4, dadurch gekennzeichnet, daß die Flüssigkeitsverteilungseinrichtung durch eine Mehrzahl von im wesentlichen parallelen beabstandeten Rinnen gebildet ist, wobei Gasdurchgänge zwischen den Rinnen vorhanden sind.

7. Die Säule nach irgendeinem der Ansprüche 1 bis 6, dadurch gekennzeichnet, daß die Flüssigkeitsverteilungseinrichtung weiterhin mit Flüssigkeitssammelmitteln versehen ist, die mit einem Flüssigkeitsauslaß der Säule zusammenarbeiten.

8. Verfahren zum Kontaktieren eines Gasstromes mit einem im Gegenstrom fließenden Flüssigkeitsstrom, in welchem Verfahren eine Säule nach irgendeinem der vorhergehenden Ansprüche verwendet wird.

9. Das Verfahren nach Anspruch 8, dadurch gekennzeichnet, daß der Gasstrom ein Naßgasstrom und der Flüssigkeitsstrom ein Flüssigkeitsabsorptionsmittel ist, welches zum Entwässern des Naßgasstromes geeignet ist.

## Revendications

1. Colonne pour mettre en contact un courant gazeux à contre-courant avec un courant de liquide, laquelle colonne comprend une couche sensiblement horizontale de matière de garnissage, une entrée de gaz et une sortie de liquide en dessous de ladite couche et une sortie de gaz et une entrée de liquide au-dessus de ladite couche, un organe de distribution de liquide sensiblement horizontal qui comprend plusieurs passages et ouvertures de gaz à travers lesquels des conduits d'écoulement de liquide sensiblement verticaux ayant des parois munies de passages pour liquide sont montés, caractérisée en ce que les extrémités inférieures des conduits d'écoulement s'étendent en dessous de l'organe de distribution de liquide et au voisinage de la surface supérieure de la couche de matière de garnissage, et où les conduits d'écoulement sont montés de façon verticalement ajustable dans les ouvertures de l'organe de distribution de liquide.

2. Colonne selon la revendication 1, caractérisée en ce que les passages de liquide dans les conduits d'écoulement sont des ouvertures en forme de fentes.

3. Colonne selon la revendication 2, caractérisée en ce que les ouvertures en forme de fentes ont une forme rectangulaire.

4. Colonne selon l'une quelconque des revendications 1 à 3, caractérisée en ce que les conduits d'écoulement ont des extrémités inférieures biseautées.

5. Colonne selon l'une quelconque des revendications 1 à 4, caractérisée en ce que l'organe de distribution de liquide est formé par un plateau au-dessus de pratiquement toute la section interne de la colonne, le plateau étant muni d'une paroi périphérique verticale pour former un récipient d'accumulation de liquide et avec des colonnes montantes comme passages pour le gaz.

6. Colonne selon l'une quelconque des revendications 1-4, caractérisée en ce que l'organe de distribution de liquide est formé par plusieurs rigoles sensiblement parallèles avec des passages pour le gaz entre lesdites rigoles.

7. Colonne selon l'une quelconque des revendications 1 à 6, caractérisée en ce que l'organe de distribution de liquide est en outre muni d'un organe de collecte de liquide coopérant avec une sortie de liquide de la colonne.

8. Procédé pour mettre en contact un courant gazeux avec un courant de liquide s'écoulant à contre-courant dans lequel on utilise une colonne selon l'une quelconque des revendications précédentes.

9. Procédé selon la revendication 8, caractérisé en ce que le courant gazeux est un courant de gaz humide et en ce que le courant de liquide est un absorbant liquide approprié pour déshydrater le courant gazeux humide.
